(19) Europäisches Patentamt
European Patent Office
Office européen des brevets

(11) Veröffentlichungsnummer: **0 160 879**
**B1**

(12) **EUROPÄISCHE PATENTSCHRIFT**

(45) Veröffentlichungstag der Patentschrift: **19.04.89**

(51) Int. Cl.⁴: **D 06 P 5/08,** D 06 M 15/61, C 08 G 73/02, C 08 G 59/50

(21) Anmeldenummer: **85104858.7**

(22) Anmeldetag: **22.04.85**

(54) **Verfahren zur Nachbehandlung von gefärbten textilen Materialien aus natürlichen oder synthetischen Polyamiden.**

(30) Priorität: **10.05.84 DE 3417240**

(43) Veröffentlichungstag der Anmeldung: **13.11.85 Patentblatt 85/46**

(45) Bekanntmachung des Hinweises auf die Patenterteilung: **19.04.89 Patentblatt 89/16**

(84) Benannte Vertragsstaaten: **CH DE FR GB IT LI**

(56) Entgegenhaltungen:
**EP-A-0 099 030**
**DE-A-1 283 801**
**DE-A-2 258 222**
**DE-A-2 949 510**
**DE-A-3 217 835**
**FR-A-2 301 629**
**GB-A-469 457**

**CHEMICAL ABSTRACTS, Band 80, Nr. 20, 20. Mai 1974, Seite 63, Zusammenfassung Nr. 109704k, Columbus, Ohio, US; & JP-A-73 28 972 (ASAHI CHEMICAL INDUSTRY CO., LTD) 06-09-1973**

(73) Patentinhaber: **BASF Aktiengesellschaft, Carl-Bosch- Strasse 38, D-6700 Ludwigshafen (DE)**

(72) Erfinder: **Fikentscher, Rolf, Dr., Von- Stephan-Strasse 27, D-6700 Ludwigshafen (DE)**
Erfinder: **Mertens, Heinrich, Dr., Brunckstrasse 11, D-6710 Frankenthal (DE)**
Erfinder: **Reincke, Klaus, In der Dreispitz 17, D-6706 Wachenheim (DE)**
Erfinder: **Vescia, Michele, Dr., Carl- Bosch- Strasse 62, D-6703 Limburgerhof (DE)**

**EP 0 160 879 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Aus der DE-OS-2 801 535 ist ein Verfahren zur Nachbehandlung von mit wasserlöslich machende Gruppen enthaltenden 1 : 2-Metallkomplexfarbstoffen gefärbtem, filzfest ausgerüstetem kreatinhaltigem Fasermaterial bekannt, bei dem man die gefärbten Materialien mit einem Fettsäure-Dialkanolamin-Umsetzungsprodukt und/oder einem Alkali- oder Ammoniumsalz einer Fettsäure behandelt. Gegenstand der DE-OS-2 948 510 ist ein Verfahren zur Herstellung von gefärbten und filzfest ausgerüsteten Wolltextilien, die mit Säurewalk- oder Metallkomplexfarbstoffen gefärbt sind, bei dem das textile Material mit einer Flotte nachbehandelt wird, die ein kationisches Fixiermittel sowie gegebenenfalls ein farbstoffaffines Egalisier- bzw. Retardiermittel enthält. Als kationische Fixiermittel werden Dicyandiamid-Formaldehyd-Ammoniumchloridkondensationsprodukte eingesetzt. Die nach den bekannten Verfahren erreichbaren Echtheiten von Färbungen, besonders in mittleren und tiefen Farbnuancen, ist noch verbesserungsbedürftig. Bei den bekannten Nachbehandlungverfahren werden Farbstoffe vom gefärbten Material abgelöst, so daß es in vielen Fällen zu einer Aufhellung der Färbung oder bei Verwendung von Farbstoffmischungen zum Färben der textilen Materialien zu Farbtonverschiebungen kommen kann.

In der EP-A-0 160 878 von gleicher Priorität wird ein Verfahren zur Herstellung von filzfest ausgerüsteter, gegebenenfalls gefärbter Wolle beschrieben, bei dem man die Wolle chloriert und anschließend eine wäßrige Lösung eines quaternären Produktes auf die Wolle aufträgt, das durch Kondensation von Piperazin und Piperazin-Derivaten mit Vernetzungsmitteln, wie Ethylenchlorid, Epihalogenhydrin, Propylenchlorid, Bisepoxibutan, 1,4-Dichlorbutan oder deren Gemischen im Molverhältnis 1 : 0,5 bis 1 : 1 und anschließender Quaternisierung mit Benzylchlorid erhalten wird, wobei man bei der Quaternisierung pro Äquivalent Stickstoff im Piperazin und Piperazin-Derivat 0,15 bis 1 Mol Benzylchlorid einsetzt.

Der vorliegenden Erfindung liegt die Aufgabe zugrunde, ein Verfahren für die Nachbehandlung von gefärbten, textilen Materialien aus natürlichen oder synthetischen Polyamiden, die mit anionischen Farbstoffen gefärbt sind, zur Verfügung zu stellen, bei dem die Naßechtheiten der Färbungen gegenüber dem Stand der Technik verbessert sind und keine Aufhellung des Farbtons bzw. Farbtonverschiebungen bei der Nachbehandlung gefärbter Materialien auftreten.

Die Aufgabe wird erfindungsgemäß gelöst mit einem Verfahren zur Nachbehandlung von gefärbten textilen Materialien aus natürlichen oder synthetischen Polyamiden, die mit säure- oder sulfonamidgruppenhaltigen Farbstoffen gefärbt sind, mit verdünnten wäßrigen Lösungen von kationischen Kondensationsprodukten, wenn man als kationische Kondensationsprodukte

(a) Piperazin, Bis-(1,4-Aminopropyl)-piperazin, 1-Aminoethylpiperazin, 1-Methylpiperazin, 2-Hydroxiethylpiperazin oder deren Gemische mit

(b) Ethylenchlorid, Epihalogenhydrin, Propylenchlorid, 1,3-Dichlor-2-hydroxy-propan, Bis-epoxibutan, 1,4-Dichlorbutan oder deren Gemische im Molverhältnis 1 : 0,5 bis 1,1 und Quaternisierung der Kondensationsprodukte mit Benzylchlorid erhalten werden, wobei man bei der Quaternisierung pro Äquivalent Stickstoff in der Komponente (a) 0,15 bis 1,0 Mol Benzylchlorid einsetzt.

Die Wolle, die erfindungsgemäß nachbehandelt wird, kann in Form von Flocke, Kammzug, Garn oder Stückware vorliegen. Die Behandlung kann auf unchlorierter oder auf chlorierter Wolle durchgeführt werden, wobei sie auf der chlorierten Wolle besonders wirksam ist. Beim Chlorieren wird zunächst in einer ersten Behandlungsstufe kontinuierlich oder diskontinuierlich mit unterchloriger Säure oder mit Chlorisocyanurat behandelt. Amstelle der Chlorierung kann man die Wolle auch mit Peroxisulfat oder Permanganat behandeln. Danach wird die Wolle gespült und dann meistens noch mit wäßrigen Lösungen von Reduktionsmitteln, wie Natriumhydrogensulfit, Natriumsulfit oder Natriumdithionit behandelt, dann gespült und gegebenenfalls getrocknet. Sie wird dann mit Metallkomplex-, Säure-, Chromierungs- oder Wollreaktivfarbstoffen in üblicher Weise gefärbt oder bedruckt und wieder gespült. Die in Betracht kommenden Farbstoffe können dem Color Index entnommen werden. Bei diesen Farbstoffen handelt es sich um wasserlösliche Farbstoffe, die mindestens eine Säuregruppe und/oder Sulfonamid-gruppe als löslichkeitsvermittelnde Bestandteile enthalten. Aus Kostengründen verwendet man hauptsächlich 1 : 1- und 1 : 2-Metallkomplexfarbstoffe und Säurefarbstoffe. Gerade diese beiden Farbstoffklassen waren bisher problematisch anzuwenden, weil die damit auf filzfester Wolle erreichbaren Färbungen keine ausreichenden Naßechtheiten aufwiesen. Nach dem Färben erfolgt die erfindungsgemäße Behandlung mit den genannten kationischen Kondensationsprodukten. Nach dieser Behandlung kann zur Verbesserung der Filzresistenz mit den dafür üblichen Harzen behandelt werden. Das Behandeln von bereits mit Harzen ausgerüsteter und gefärbter Wolle mit den erfindungsgemäßen Kondensationsprodukten verbessert die Naßfarbechtheiten gleichfalls, ist aber nicht bevorzugt.

Das erfindungsgemäße Verfahren wird außerdem zur Nachbehandlung von Färbungen auf Seide und auf synthetischen Polyamiden angewendet. Auf Seide sind beispielsweise Färbungen mit anionischen Farbstoffen meistens noch weniger echt als mit den gleichen Farbstoffen auf Wolle, was in Anbetracht des hohen Werts dieses Fasermaterials oft zu Beanstandungen führt. Seide muß außerdem aus modischen Gründen oft mit leuchtenden, wenig naßechten Farbstoffen gefärbt werden. Deshalb ist es in der Praxis notwendig, Färbungen auf Seide in der Naßechtheit zu verbessern.

Als kationische Nachbehandlungsmittel verwendet man Stoffe, die durch Umsetzung von

(a) Piperazin, Bis-(1,4-Aminopropyl)-piperazin, 1-Aminoethylpiperazin, 2-Hydroxiethylpiperazin, 1-Methylpiperazin mit

(b) Ethylenchlorid, Epihalogenhydrin (z. B. Epichlorhydrin und Epibromhydrin), Propylenchlorid, wie 1,2-Propylenchlorid und 1,3-Propylenchlorid, 1,3-Dichlor-2-hydroxypropan, Bis-epoxibutan oder 1,4-Dichlorbutan oder deren Gemische

im Molverhältnis 1 : 0,5 bis 1,1, vorzugsweise 1 : 0,8 bis 1,0 bei pH-Werten zwischen 6,5 bis 12, vorzugsweise 7 bis 10 und anschließender Quaternisierung der Kondensationsprodukte mit Benzylchlorid erhalten werden. Für die Einstellung des pH-Wertes bei der Kondensation verwendet man gegebenenfalls Basen, wie Natronlauge, Kalilauge, Natriumcarbonat, Calciumoxid, Calciumhydroxid, Bariumoxid oder Bariumhydroxid. Sofern die Verbindungen der Gruppe (a) im Überschuß bei der Kondensation eingesetzt werden, stellt sich aufgrund der Basizität dieser Verbindungen ein pH-Wert im alkalischen Bereich ein. Die Kondensation wird in wäßriger oder alkoholischer Lösung bei einem Feststoffgehalt der Lösung von 20 bis 60 Gew.-% und Temperaturen von 60 bis 100°C durchgeführt. Als alkoholische Lösemittel verwendet man z. B. Ethylenglykol, Propylenglykol, Diglykol und/oder Neopentylglykol. Die wasserlöslichen nicht quaternierten Kondensationsprodukte haben in 45-%-iger wäßriger Lösung bei einer Temperatur von 20°C eine Viskosität von mindestens 500 mPas. Wirksame kationische Nachbehandlungsmittel erhält man, wenn man die kationischen Kondensationsprodukte - besonders diejenigen aus Piperazin und Epichlorhydrin bzw. Ethylenchlorid - anschließend mit Benzylchlorid quaternisiert.

Für die Quaternisierung der Kondensationsprodukte aus den Komponenten (a) und (b) setzt man pro N-Äquivalent der Komponente (a) 0,15 bis 1,0, vorzugsweise 0,4 bis 0,75 Mol Benzylchlorid ein. Die Quaternisierung erfolgt vorzugsweise in wäßrigen Medium bei Temperaturen von 60 bis 100°C. Sowohl die Kondensationsreaktion als auch die Quaternisierung der Kondensationsprodukte kann bei Temperaturen oberhalb 100°C unter Druck vorgenommen werden. Man erreicht dadurch kürzere Reaktionszeiten. Die wäßrigen bzw. alkoholischen Lösungen der quaternisierten Kondensationsprodukte können direkt als kationisches Kondensationsprodukt verwendet werden.

Die quaternisierten kationischen Kondensationsprodukte werden für die Nachbehandlung von gefärbter Wolle, die gegebenenfalls filzfest ausgerüstet sein kann, Seide oder synthetischen Polyamiden in Form von wäßrigen Flotten eingesetzt, deren Gehalt an den Kondensationsprodukten so berechnet wird, daß 0,2 bis 3, vorzugsweise 0,3 bis 1 Gew.-% der 100-%-igen Produkte auf das Textilgut gelangen. Der pH-Wert der Nachbehandlungsflotten beträgt 5 bis 9, vorzugsweise 6 bis 8. Die Nachbehandlung der gefärbten Materialien kann diskontinuierlich in Färbeapparaten oder kontinuierlich für Kammzug oder Flächengut in Lisseusen, Foulards oder Breitwaschanlagen erfolgen. Die diskontinuierliche Behandlung der gefärbten Materialien mit den wäßrigen Flotten dauert 5 bis 30 Minuten. Bei der kontinuierlichen Behandlung liegt die Kontaktzeit in der Flotte im Sekundenbereich und die Fixierung erfolgt beim Trocknen. Die Badtemperaturen betragen 20 bis 80, vorzugsweise 30 bis 50°C. Nach der Behandlung mit den quaternären, kationischen Kondensationsprodukten wird das Material gegebenenfalls gespült und anschließend getrocknet. Die Trocknungstemperatur hat keinen signifikanten Einfluß auf die Verbesserung der Echtheiten. Die Trocknung wird im allgemeinen bei Temperaturen von 80 bis 150°C vorgenommen.

Erfindungsgemäß nachbehandelte, gefärbte, synthetische oder natürliche Polyamidmaterialien zeigen nach der Behandlung mit den erfindungsgemäß zu verwendenden Kondensationsprodukten keine Farbaufhellungen und daher bei Kombinationsfärbungen auch keine Farbtonverschiebungen. Mit Hilfe des erfindungsgemäßen Verfahrens ist es möglich, auch mit Säurefarbstoffen oder Metallkomplexfarbstoffen gefärbte und filzfest ausgerüstete Wolle mit Naßechtheiten herzustellen, die den strengen Anforderungen des International Wool Secretariat (IWS) entsprechen.

Die in den Beispielen angegebenen Teile sind Gewichtsteile, die Angaben in Prozent beziehen sich auf das Gewicht der Stoffe und bei den Nachbehandlungsmitteln zudem auf wasserfreie Wirksubstanz. Die Viskositäten der Kondensationsprodukte wurden mit einem Rotationsviskosimeter (Haake, RV 3) gemessen. Als Nachbehandlungsmittel wurden folgende Produkte verwendet:

**Kondensationsprodukt 1**

Zu 95,5 Teilen einer 67,2-%-igen wäßrigen Piperazinlösung (0,75 Mol) gab nan 47,7 Teile Kondenswasser und erhitzte die Lösung auf eine Temperatur von 75°C. Sobald diese Temperatur erreicht war, ließ man innerhalb 1 Stunde in dem Temperaturbereich zwischen 70 und 80°C 69 Teile Epichlorhydrin (0,75 Mol) zulaufen und erhitzte die Mischung anschließend 3 Stunden lang auf eine Temperatur von 80°C. Während dieser Zeit stieg die Viskosität der Reaktionsgemische auf ca. 500 mPas an, während der pH-Wert auf 7,0 abfiel. Danach setzte man 134,3 Teile Wasser und 59,7 Teile einer 50-%-igen Natronlauge zu und ließ innerhalb von 40 bis 60 min bei einer Temperatur von 80°C 94 Teile Benzylchlorid (0,74 Mol) zulaufen. Die Benzylierung wurde durch zweistündiges Erhitzen der Gemische bei einer Temperatur von 80°C vervollständigt. Man kühlte das Reaktionsgemisch auf 30°C ab und setzte anschließend 343,1 Teile einer 85-%-igen Ameisensäure und 156,7 Teile Wasser zu. Man erhielt insgesamt 1000 Teile Kondensationsproduktes 1 in Form einer 20-%-igen Lösung.

**Kondensationsprodukt 2**

Zu 717 Teilen (3,7 Mol) Piperazinhexahydrat und 200 Teilen Wasser wurden in dem Temperaturbereich von 70 bis 80°C innerhalb von 3 bis 4 Stunden 346 Teile (3,5 Mol) Ethylenchlorid zugegeben. Nach Beendigung der Ethylenchloridzugabe wurde das Reaktionsgemisch 2 Stunden zum Sieden am Rückfluß erhitzt. Danach fügte man 812 Teile einer 50-%-igen wäßrigen Kalilauge und 2500 Teile Wasser zu (pH 11,3) und erhitzte die Mischung 3 Stunden auf eine Temperatur in dem Bereich von 80 bis 90°C. Man erhielt eine Suspension, die mit Wasser verdünnt wurde, und zentrifugierte anschließend das feinkristalline Polyethylenpiperazin ab und trocknete es.

Zu einer Suspension von 56 Teilen Polyethylenpiperazin (0,5 Äquivalent Piperazin) in 80 Teilen Wasser gab man bei einer Temperatur in dem Bereich von 70 bis 80°C innerhalb von 10 Minuten 63,5 Teile Benzylchlorid (0,5 Äquivalent) und erhitzte das Reaktionsgemisch 2 Stunden auf eine Temperatur von 80°C. Danach wurde die Mischung auf 25°C abgekühlt und mit 40 Teilen Wasser verdünnt. Man erhielt eine 50-%-ige wäßrige Lösung des Kondensationsproduktes 2.

**Kondensationsprodukt 3**

516 Teile Piperazin (6 Mol) in 644 Teilen Wasser wurden innerhalb von 50 Minuten mit 496,7 Teilen Epichlorhydrin versetzt. Man ließ hierbei die Reaktionstemperatur von 50 auf 88°C ansteigen. Anschließend wurde das Reaktionsgemisch weitere 4 Stunden bei 90 bis 95°C gehalten. Das Reaktionsprodukt hatte dann eine Viskosität von 4400 mPas (20°C) und einen Chloridgehalt von 3,25 mMol/g. Es wurde mit 414 Teilen Wasser versetzt und auf Raumtemperatur gekühlt (Viskosität 270 mPas (20°C)).

1750 Teile dieser Lösung wurden mit 3050 Teilen Propandiol-1,2 und 1050 Teilen Wasser versetzt, 400 Teile 50-%-ige Natronlauge zugegeben und dann bei 60 bis 70°C 882 Teile Benzylchlorid langsam eingetragen. Nach 5-stündiger Reaktionsdauer bei 80°C hatte die klare Lösung einen Chloridgehalt von 1,59 mMol/g, einen pH-Wert von 3,9 und eine Viskosität von 90 mPas (20°C). Der Wirkstoffgehalt der Lösung des Kondensationsprodukts 3 lag bei 21,9 %.

**Kondensationsprodukt 4**

528 Teile 98-%-iges Piperazin (2 % Wasser) (6 Mol) wurden in 1047 Teilen Propandiol-1,2 gelöst und bei 60 bis 90°C innerhalb von einer Stunde mit 497 Teilen Epichlorhydrin (5,37 Mol) versetzt. Die Reaktionslösung wurde bei 95°C gehalten bis der Chloridtiter bei 2,3 mMol/g konstant blieb und die Viskosität bei 25 700 mPas (20°C) lag (4,5 Stunden).

1725 Teile dieses Kondensationsproduktes wurden mit 440 Teilen 50-%-iger wäßriger Natronlauge und 2630 Teilen Propandiol versetzt und 882 Teile Benzylchlorid innerhalb von 1 Stunde bei 60 bis 80°C zugegeben. Nach weiteren 3 Stunden Reaktionstemperatur von 80°C war die Alkylierung beendet. Es wurde mit 1720 Teilen Wasser versetzt und auf Raumtemperatur gekühlt. Die klare Lösung des Kondensationsproduktes 4 hatte einen Chloridtiter von 1,65 mMol/g, einen pH-Wert von 4,8 und eine Viskosität von 150 mPas (20°C).

**Kondensationsprodukt 5**

1730 Teile des Piperazin-Epichlorhydrin-Kondensationsproduktes, dessen Herstellung unter Kondensationsprodukt 3 beschrieben ist, wurden mit 2560 Teilen Ethylenglykol und 440 Teilen 50-%-iger wäßriger Natronlauge versetzt. Bei 60 bis 80°C wurden innerhalb 0,5 Stunden 882 Teile Benzylchlorid zugegeben und anschließend 5 Stunden bei 80°C gehalten. Nach Abkühlen auf Raumtemperatur hatte die klare Lösung einen pH-Wert von 4,3, einen Chloridgehalt von 2,05 mMol/g und eine Viskosität von 285 mPas (20°C). Der Wirkstoffgehalt betrug 27,8 % an Kondensationsprodukt 5.

**Kondensationsprodukt 6**

Man verfuhr wie unter Kondensationsprodukt 5 angegeben, führte jedoch die Benzylierung nicht in Ethylenglykol, sondern nach Zugabe der gleichen Menge an Diethylenglykol zu dem Piperazin-Epichlorhydrin-Kondensationsprodukt durch. Man erhielt eine klare Lösung des Kondensationsprodukts 6.

**Kondensationsprodukt 7**

Zu 516 Teilen Piperazin wurden 634 Teile Wasser und ab 50°C innerhalb von einer Stunde 444 Teile Epichlorhydrin langsam kontinuierlich zugegeben. Während der Zugabe wurde die Reaktionstemperatur auf 90°C angehoben und anschließend 4 Stunden bei 90°C gehalten. Das Kondensationsprodukt hatte dann einen Chloridgehalt von 3,1 mMol/g und eine Viskosität von 750 mPas (20°C). Es wurde mit 369 Teilen Wasser auf 40 % Wirksubstanz eingestellt. 332 Teile des Kondensationsproduktes wurden mit 130 Teilen 50-%-iger Natronlauge und 248 Teilen Propandiol versetzt und bei 50 bis 70°C innerhalb von 40 Minuten 252 Teile Benzylchlorid zugegeben. Nach 5,5 Stunden bei 70 bis 80°C war die Benzylierung abgeschlossen. Es wurde mit 784 Teilen Wasser auf einen Wirkstoffgehalt von 22 % verdünt. Die klare stabile Lösung hatte einen pH-Wert von 4,4, eine Viskosität von 60 mPas (20°C) und einen Chloridgehalt von 1,6 mMol/g. Der Wirkstoffgehalt der Lösung an Kondensationsprodukt 7 lag bei 22 %.

**Kondensationsprodukt 8**

200 Teile N-2-Aminoethylpiperazin wurden in 329 Teilen Wasser gelöst und bei 60 bis 80°C innerhalb von 4 Stunden mit 129 Teilen Epichlorhydrin umgesetzt. Der Chloridtiter der viskosen Lösung betrug dann 2,1 mMol/g, die Viskosität lag bei 825 mPas (20°C). Das Kondensationsprodukt wurde mit 540 Teilen Propylenglykol-1,2 verdünnt, dann innerhalb von 2 Stunden mit 444 Teilen Benzylchlorid bei 90°C versetzt und so lange bei 90°C gehalten, bis der Chloridtiter konstant blieb (3,07 mMol/g), mit 62 Teilen 50-%-iger Natronlauge wurde die Reaktionslösung während der Benzylierung bei pH 8 gehalten. Das viskose Reaktionsprodukt wurde mit 703 Teilen Wasser zu einer klaren, 30 % Wirksubstanz enthaltenden Lösung des kationischen Kondensationsproduktes 8 verdünnt.

Die in den Beispielen mit Farbstoff 1 bis 5 bezeichneten Farbstoffe hatten folgende Konstitution:

Farbstoff 1

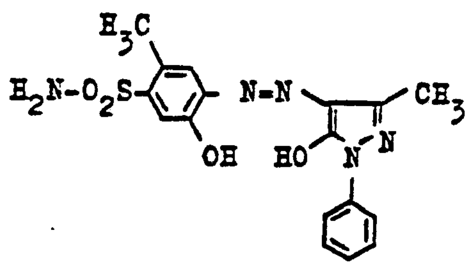

Farbstoff 2

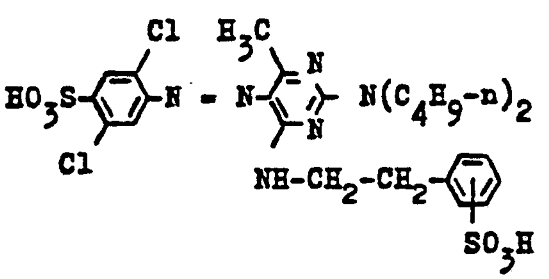

Farbstoff 3

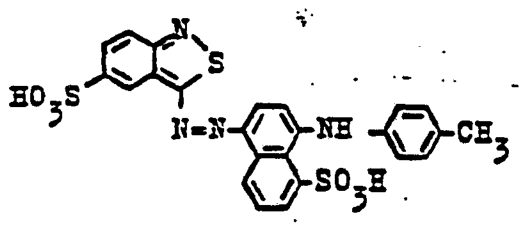

Farbstoff 4

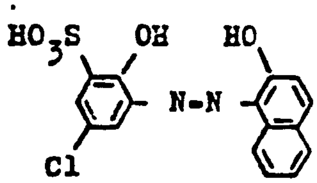

Farbstoff 5

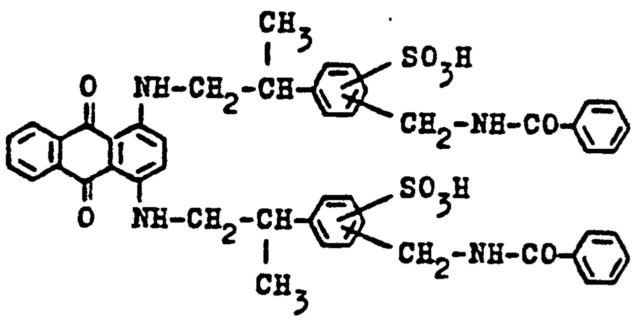

**Beispiel 1**

Um die Verfilzungsneigung von Wollgarn zu verringern, wurde es zunächst mit einer wäßrigen Lösung behandelt, die 3 % Natriumdichlorisocyanurat, entsprechend 1,9 % Aktivchlor, bezogen auf das Wollgewicht, enthielt. Der pH-Wert der Lösung betrug 4,8. Es wurde dann mit einer wäßrigen Lösung von Natriumdisulfit behandelt, um das restliche, nicht gebundene Chlor zu entfernen. Nach dem Spülen mit Wasser färbte man das chlorierte Wollgarn mit einer wäßrigen Lösung des blauen 1 : 2-Chromkomplexes des Säurefarbstoffs der Colour Index Nr. 15 707 bei einer Temperatur von 100° C. Nach dem Färben wurde das Garn gespült und in drei Teile geteilt.

a) Ein Teil des gefärbten Garns wird sofort getrocknet und nach den Testmethoden des IWS auf Wasch- und Schweißechtheit geprüft. Die Werte sind in Tabelle 1 angegeben.

b) Der zweite Teil des gefärbten Wollgarns wurde mit einer wäßrigen Lösung nachbehandelt, die 1 % eines Umsetzungsprodukts von 15 Teilen Dicyandiamid, 40 Teilen Formaldehyd und 10 Teilen Ammoniumchlorid und weiter 1 % eines mit 40 Mol Ethylenoxid umgesetzten Stearylamins (als Hydrochlorid) enthielt. Mit der Lösung wurde 15 Minuten bei 50° C und pH 7,5 behandelt, dann wurde kalt gespült und nach dem mechanischen Entwässern bei 100° C getrocknet.

c) Der dritte Teil des gefärbten Wollgarns wurde mit einer wäßrigen Lösung nachbehandelt, die 1 % des Kondensationsproduktes 1 enthielt und einen pH-Wert von 7 hatte. Die Temperatur der Flotte betrug zunächst 20° C. Die Flotte wurde dann rasch auf 50° C erwärmt und 15 Minuten bei dieser Temperatur gehalten. Danach war die Nachbehandlung des Wollgarns beendet, das dann kalt gespült und bei einer Temperatur von 100° C getrocknet wurde. Danach erfolgten die Prüfungen, deren Ergebnisse in Tabelle 1 angegeben sind. Farbtonänderung (F) und Anbluten von Begleitgewebe wurden mit dem Graumaßstab verglichen, wobei Note 1 die geringste und Note 5 die höchst mögliche Echtheit darstellt.

**Tabelle 1**

| Wollgarn behandelt nach | IWS-TM 193 (Waschechtheit) | | | IWS-TM 174 (Schweißechtheit) | | | IWS-TM 165 (Reibechtheit) |
|---|---|---|---|---|---|---|---|
| | F | Hercosett-Wo | Bw | F | Hercosett-Wo | Bw | |
| (a) | 3 | 1 | 4 | 4 | 1-2 | 3 | 4 |
| (b) Vergleich | 3-4 | 2 | 4 | 4 | 2 | 3-4 | 3-4 |
| (c) gemäß Erfindung | 4-5 | 4-5 | 4-5 | 4-5 | 4-5 | 4-5 | 4 |
| Wollsiegel-Limit (Maschinenwäsche) | 3 | 3-4 | 3 | 3 | 3-4 | 3 | 3 |

F = Farbtonänderung
Wo = Wolle
Bw = Baumwolle

Der Wollsiegel-Standard wird nur bei der erfindungsgemäßen Nachbehandlung erreicht. Die Vergleichsbehandlung gemäß b) zeigt bei Metallkomplexfarbstoffen in dieser tiefen Ausfärbung kaum noch Wirkung.

Das nicht nachbehandelte Garn blutet das nach dem Hercosett-Verfahren filzfest ausgerüstete Begleitgestrick stark an, während das erfindungsgemäß nachbehandelte Garn (c) die Anforderungen des IWS sicher erfüllt.

**Beispiel 2**

Ein Gestrick aus reinwollenem Streichgarn wurde gewaschen, in wäßriger Flotte, die 2 % Natriumdichlorisocyanurat enthielt und einen pH-Wert von 3,2 hatte, chloriert, und anschließend in einer wäßrigen Flotte gefärbt, die 2,5 % des roten Metallkomplexfarbstoffs Nr. 1 enthielt. Die Temperatur beim Färben betrug 98° C. Danach wurde das Gestrick geteilt und unterschiedlich weiterverarbeitet:

a) Der erste Teil wurde ohne weitere Behandlung getrocknet.
b) Der zweite Teil der Strickware wurde zur Verbesserung der Filzresistenz bei dem Flottenverhältnis 1 : 30 mit einer 0,07-%-igen wäßrigen Lösung eines handelsüblichen Polyamidoamins, das mit Epichlorhydrin vernetzt war, behandelt, danach getrocknet und auf Echtheiten geprüft. Die Ergebnisse sind in Tabelle 2 angegeben.
c) Der dritte Teil wurde wie b) mit einer Lösung eines mit Epichlorhydrin vernetzten Polyamidoamids behandelt, getrocknet und dann nachbehandelt mit 1 % eines Umsetzungsprodukts von 20 Teilen Dicyandiamid, 40 Teilen Formaldehyd und 12 Teilen Ammoniumchlorid und weiter 1 % eines mit 40 Mol Ethylenoxid umgesetzten Stearylamins. Die Temperatur betrug 25° C, der pH-Wert 8 und die Dauer 20 Minuten. Nach dem Spülen wurde bei 100° C getrocknet.
d) Der vierte Teil des gefärbten Gestricks wurde im Flottenverhältnis 1 : 30 mit einer 0,03-%-igen wäßrigen Lösung des Kondensationsproduktes 2 bei einer Temperatur von 40° C behandelt. Die Behandlungslösung hatte einen pH-Wert von 6. Anschließend erfolgte die Komplettierung der Filzfestausrüstung in derselben Weise wie bei b). Das so behandelte Material wurde bei 100° C getrocknet und nach den Normen des IWS geprüft. Die Ergebnisse sind in Tabelle 2 angegeben.

**Tabelle 2**

| Gestrick aus Wolle behandelt nach | IWS-TM 193 (Waschechtheit) | | | IWS-TM 174 (Schweißechtheit) | | | IWS-TM 165 (Reibechtheit) |
|---|---|---|---|---|---|---|---|
| | F | Hercosett-Wo | Bw | F | Hercosett-Wo | Bw | |
| (a) | 3-4 | 1-2 | 4 | 3-4 | 2 | 4 | 4 |
| (b) | 4 | 2 | 4 | 3-4 | 2-3 | 4 | 3-4 |
| (c) | 4 | 2-3 | 4 | 3-4 | 2-3 | 4 | 3 |
| (d) | 4 | 4-5 | 4-5 | 4 | 4-5 | 4-5 | 4 |

Der Wollsiegel-Standard (s. Tabelle 1) wird bei dieser tiefen Färbung nur durch die erfindungsgemäße Nachbehandlung (d) det mit Chlor und Kunstharz filzfest gemachten Wolle erreicht.

**Beispiel 3**

a) Ein Wollkammzug wurde zunächst in einem kontinuierlichen Prozeß in stark saurer Hypochloritlösung bei einem pH-Wert von 1,2 chloriert bis zu einer Aktivchloraufnahme von 1,8 %, anschließend entchlort durch Behandlung mit Natriumsulfitlösung und danach mit einer handelsüblichen wäßrigen Lösung eines mit Epichlorhydrin vernetzten Polyamidoaminharzes behandelt. Die Harzauflage betrug 1,8 %. Das auf diese Weise filzfest ausgerüstete und getrocknete Material wurde dann in einer wäßrigen Flotte bei einer Temperatur von 103°C gefärbt, so daß die Ware 4 % des 1 : 2-Chromkomplexes des schwarzen Säurefarbstoffs der Colour Index Nr. 15 711 enthielt, danach gespült und getrocknet. Die Echtheitseigenschaften dieses Materials sind in Tabelle 3 angegeben.

b) Wie unter a) beschrieben, wird Wollkammzug durch Chlorieren in einer stark sauren Hypochloritlösung bei einem pH-Wert von 1,2 zu einer Aktivchloraufnahme von 1,8 % behandelt, danach entchlort und mit einer wäßrigen Flotte gefärbt, so daß die Ware ebenfalls 4 % des unter a) genannten Metallkomplexfarbstoffs enthielt. Das Material wurde dann gespült und zur Verbesserung der Echtheitseigenschaften mit einer wäßrigen Lösung des Kondensationsproduktes 3 bei einer Temperatur von 40°C behandelt. Der pH-Wert der wäßrigen Lösung des Kondensationsproduktes betrug 7,5, die Auflagemenge 0,7 %. Das so behandelte Material wurde dann mit dem gleichen Polyamidoaminharz, das mit Epichlorhydrin vernetzt ist, wie im Fall a), nachbehandelt. Die Harzauflage betrug hier ebenfalls 1,8 %. Die Echtheitseigenschaften dieses Materials sind in Tabelle 3 angegeben.

**Tabelle 3**

| Wollkammzug behandelt nach | | TWS-TM 193 (Waschechtheit) | | | IWS-TM 174 (Schweißechtheit) | | IWS-TM 165 (Reibechtheit) |
|---|---|---|---|---|---|---|---|
| | F | Hercosett-Wo | Bw | F | Hercosett-Wo | Bw | |
| (a) | 3-4 | 1 | 4 | 4 | 2 | 4 | 4 |
| (b) | 4-5 | 4-5 | 4-5 | 4-5 | 4 | 4-5 | 4 |

Wie aus der Tabelle ersichtlich ist, entspricht die mit einem Metallkomplexfarbstoff auf Wolle erhaltene Schwarzfärbung bezüglich der Naßechtheiten und der Reibechtheit den "Superwash"-Anforderungen des IWS.

**Beispiel 4**

a) Wollgarn, das in Kammzugform nach dem Hercosett-Verfahren kontinuierlich chloriert und mit einer Harzauflage aus einem Polyamidoamin, das mit Epichlorhydrin vernetzt worden war, filzfest ausgerüstet war, wurde verstrickt und dann mit einer wäßrigen Flotte gefärbt, die 4 % des 1 : 2-Chromkomplexes des schwarzen Säurefarbstoffs der Colour Index Nr. 15 711 enthielt. Das Material wurde gespült, getrocknet und auf Echtheiten geprüft.

b) Gemäß a) erhaltene gefärbte Strickware wurde mit einer wäßrigen Flotte des Kondensationsproduktes 4 nachbehandelt. Die Flotte hatte eine Temperatur von 50°C. Die Behandlungsdauer betrug 20 Minuten, der pH-Wert der Flotte 7,5. Nach dieser Behandlung wurde 1 % des Kondensationsproduktes 4 aufgenommen.

c) Eine gemäß a) erhaltene gefärbte Stickware wurde mit einer wäßrigen Lösung bei einer Temperatur von 50°C behandelt, die 1 % des Natriumsalzes des Schwefelsäureesters eines Ethoxilierungsprodukts aus einem $C_{16}/C_{18}$-Fettalkohol und 80 Mol Ethylenoxid als Dispergiermittel enthielt. Diese Behandlung dauerte 10 Minuten. Danach wurde zu diesem Bad eine wäßrige Lösung des Kondensationsproduktes 4 zugesetzt. Das Material wurde dann 20 Minuten bei einer Temperatur von 50°C von einem pH-Wert von 7 behandelt und danach gespült. Nach dieser Behandlung enthielt das Material 1 % des Kondensationsproduktes 4.

Die gemäß a) bis c) erhaltenen Proben wurden auf Echtheiten untersucht. Die Ergebnisse sind in Tabelle 4 angegeben.

**Tabelle 4**

| Gestrick aus Wollgarn behandelt gemäß | ISW-TM 193 (Waschechtheit) Hercosett-Wo | IWS-TM 174 (Schweißechtheit) Ausbluten von Hercosett-Wo | IWS-TM 165 (Reibechtheit) Bw |
|---|---|---|---|
| a) | 1 | 3 | 4 |
| b) | 2-3 | 4 | 2 |
| c) | 3-4 | 4 | 3 |
| IWS-Limit | 4 | 4 | 3 |

Wie die Werte zeigen, verbessert die erfindungsgemäße Nachbehandlung auch bei zuerst mit Harzen behandelter und dann gefärbter Wolle die Naßechtheiten, doch kann bei dieser Arbeitsfolge die Reibechtheit durch kationische Nachbehandlungsmittel jeder Art zurückgehen (b). Durch Kombination der erfindungsgemäßen Mittel mit geeigneten Dispergiermitteln läßt sich dieser Nachteil abschwächen (c).

**Beispiel 5**

a) Wollmusselin wurde ih wäßriger Lösung bei pH 4 mit 3 % Natriumdichlorcyanurat chloriert, in einem anderen Bad durch Einwirkung von Natriumsulfit entchlort und dann gespült. Das so vorbehandelte Material wurde zweifarbig bedruckt, und zwar brachte man jeweils 2 breite Streifen einer Druckpaste auf, von denen die eine 15 g/kg des gelben Farbstoffs 2 und die andere 30 g/kg des roten 1 : 2-Chromsäurekomplexes des Farbstoffs 1 enthielt. Die Drucke wurden 30 Minuten in Sattdampf bei einer Temperatur von 102°C gedämpft und danach mit kaltem Wasser gespült. Ein Teil des Gewebes wurde getrocknet und auf Echtheiten geprüft. Die dabei erhaltenen Ergebnisse sind in Tabelle 5 angegeben.

b) Der andere Teil des gemäß a) erhaltenen gedruckten Gewebes wurde 15 Minuten lang mit einer wäßrigen Lösung des Kondensationsproduktes 5 behandelt. Die Behandlungstemperatur des gefärbten Gewebes lag bei 40°C, der pH-Wert der Behandlungslösung bei 6. Das behandelte Gewebe hatte 0,8 % des Kondensationsproduktes 5 aufgenommen. Das Material wurde danach getrocknet und auf Echheiten geprüft. Die Ergebnisse sind ebenfalls in Tabelle 5 angegeben.

**Tabelle 5**

| gelb bedruckter Wollmusselin, behandelt nach | Schweißechtheit alk. (DIN 54 020) | | | Wasserechtheit schwer (DIN 54 006) | | |
|---|---|---|---|---|---|---|
| | F | Wo | Bw | F | Wo | Bw |
| a) | 4 | 1 | 2 | 4 | 3-4 | 4 |
| b) | 4 | 4-5 | 4-5 | 4-5 | 4-5 | 4-5 |
| rot bedruckter Wollmusselin, behandelt nach | | | | | | |
| a) | 3-4 | 1 | 1-2 | 3-4 | 2 | 3-4 |
| b) | 4 | 3-4 | 4 | 4-5 | 4 | 4-5 |

**Beispiel 6**

a) Wollgabardine wird mit einer wäßrigen Flotte, die 3,5 % des violetten 1 : 1-Chromkomplexes des Säurefarbstoffs der Colour Index Nr. 16 260 enthält, wie üblich im schwefelsauren Bad bei einer Temperatur von 100°C gefärbt. Ein Teil des Gewebes wird nach dem Färben und Spülen mit einer wäßrigen Lösung von Natriumacetat neutralisiert, gespült, getrocknet und auf Echtheiten geprüft.

b) Der andere Teil des gemäß a) gefärbten und gespülten Gewebes wurde mit einer wäßrigen Flotte behandelt, die 5 % Natriumacetat und 2,5 % des wasserlöslichen Kondensationsproduktes 6 enthielt. Der pH-Wert dieser Flotte betrug 8, die Behandlungsdauer 15 Minuten und die Temperatur der Flotte 40°C. Von beiden Proben wurden die in Tabelle 6 angegebenen Echtheiten geprüft.

**Tabelle 6**

| Wollgabardine behandelt nach | Wasserechtheit schwer DIN 54 006 | Schweißechtheit alkalisch nach DIN 54 020 | Schweißechtheit sauer nach DIN 54 020 |
|---|---|---|---|
| a) | 2 | 3 | 2 |
| b) | 4 | 4 | 3-4 |
| Wollsiegel-Limit (Handwäsche) | 3 | - | - |

Die erfindungsgemäße Nachbehandlung der Färbung gemäß b) gestattet es, mit 1 : 1-Metallkomplexfarbstoffen gefärbte Wollgewebe mit dem Wollsiegel auszuzeichnen.

**Beispiel 7**

a) Ein Trikot aus dem synthetischen Polyamid Nylon-6 wurde bei einer Temperatur von 100°C in üblicher Weise mit einer wäßrigen Flotte gefärbt, die 2,8 % des blauen Farbstoffs 3 und 0,8 % des violetten Farbstoffs 4 enthielt. Nach dem Färben wurde das Material gespült.

b) Ein gemäß a) erhaltenes Trikot wurde mit.einer wäßrigen Lösung des Kondensationsproduktes 7 bei einer Temperatur von 40°C behandelt. Die Behandlungsdauer betrug 15 Minuten, der pH-Wert der Flotte 8. Das Trikot hatte nach der Behandlung 1 % des Kondensationsproduktes 7 aufgenommen. In Tabelle 7 sind die Werte für die alkalische Schweißechtheit angegeben.

**Tabelle 7**

| synthetisches Polyamid behandelt nach | Schweißechtheit alkalisch (DIN 54 020) | | |
|---|---|---|---|
| | F | Polyamid | Bw |
| a) | 4-5 | 2 | 2 |
| b) | 4-5 | 4-5 | 3-4 |

Wie die Ergebnisse zeigen, blutet das nicht nachbehandelte gefärbte Polyamidmaterial bei Schweißeinwirkung weißes Begleitgewebe stark an, wogegen das behandelte Material die Weißware nur wenig verfärbt.

**Beispiel 8**

a) Ein Gewebe aus Naturseide wurde in wäßriger Flotte, die 4 % des blauen Farbstoffs 5 enthielt, bei einer Temperatur von 98°C gefärbt, gespült und getrocknet.

b) Ein gemäß a) gefärbtes Gewebe aus Seide wurde mit einer wäßrigen Flotte nachbehandelt, die 1,5 % des Kondensationsproduktes 7 gelöst enthielt. Die Behandlungstemperatur betrug 50°C und der pH-Wert 8. Die Ergebnisse von Echtheitsprüfungen sind in Tabelle 8 angegeben.

**Tabelle 8**

| Gewebe aus Seide erhalten nach | Wasserechtheit schwer DIN 54 006 | | | Schweißechtheit alkalisch DIN 54 020 | | |
|---|---|---|---|---|---|---|
| | F | Seide | Bw | F | Seide | Bw |
| a) | 4 | 2-3 | 4-5 | 4 | 2-3 | 4-5 |
| b) | 4-5 | 4-5 | 4-5 | 4 | 4-5 | 4-5 |

Wie die Werte für die Echtheiten der Färbungen zeigen, wird es erst durch die Nachbehandlung gemäß b) ermöglicht, den brillianten blauen Farbton auf Seide ausreichend echt zu färben.

**Patentansprüche**

1. Verfahren zur Nachbehandlung von gefärbten textilen Materialien aus natürlichen oder synthetischen Polyamiden, die mit säuregruppen-haltigen oder sulfonamidgruppen-haltigen Farbstoffen gefärbt sind, mit verdünnten wäßrigen Lösungen von kationischen Kondensationsprodukten, dadurch gekennzeichnet, daß man als kationische Kondensationsprodukte Stoffe verwendet, die durch Umsetzung von

a) Piperazin, Bis-(1,4-Aminopropyl)-piperazin, 1-Aminoethylpiperazin, 2-Hydroxyethylpiperazin, 1-Methylpiperazin oder deren Gemische mit
(b) Ethylenchlorid, Epihalogenhydrin, Propylenchlorid, 1,3-Dichlor-2-hydroxy-propan, Bis-epoxibutan, 1,4-Dichlorbutan oder deren Gemische

im Molverhältnis 1 : 0,5 bis 1,1 und Quaternisierung der Kondensationsprodukte mit Benzylchlorid erhalten werden, wobei man bei der Quaternisierung pro Äquivalent Stickstoff in der Komponente (a) 0,15 bis 1,0 Mol Benzylchlorid einsetzt.

2. Verfahren nach Anspruch 1, dadurch gekennzeichnet, daß der pH-Wert der wäßrigen Lösungen der kationischen Kondensationsprodukte 5 bis 9 beträgt.

3. Verfahren nach den Ansprüchen 1 und 2, dadurch gekennzeichnet, daß durch die Nachbehandlung 0,2 bis 3 Gew.-% des kationischen Kondensationsprodukts auf die textilen Materialien aufgebracht werden.

4. Verfahren nach den Ansprüchen 1 bis 3, dadurch gekennzeichnet, daß filzfest ausgerüstete Wolle nachbehandelt wird.

5. Verfahren nach Anspruch 1, dadurch gekennzeichnet, daß filzfest ausgerüstete und mit Metallkomplexfarbstoffen gefärbte Wolle nachbehandelt wird.

**Claims**

1. A process for the aftertreatment of a textile material made of a natural or synthetic polyamide dyed with a dye that contains acid or sulfonamide groups, with a dilute aqueous solution of a cationic condensate, which comprises using as the cationic condensate a substance which is obtained by reaction of

(a) piperazine, bis-(1,4-aminopropyl)-piperazine, 1-aminoethylpiperazine, 2-hydroxyethylpiperazine or 1-methyl piperazine, or a mixture of these, with
(b) ethylene chloride, an epihalohydrin, propylene chloride, 1,3-dichloro-2-hydroxypropane, bis-epoxybutane or 1,4-dichlorobutane, or a mixture of these,

in a molar ratio of from 1 : 0.5 to 1 : 1.1, and quaternization of the condensate with benzyl chloride, from 0.15 to 1.0 mole of benzyl chloride being employed per equivalent of nitrogen in component (a) during the quaternization.

2. A process as claimed in claim 1, wherein the pH of the aqueous solution of the cationic condensate is from 5 to 9.

3. A process as claimed in claim 1 or 2, wherein, as a result of the aftertreatment, from 0.2 to 3 % by weight of the cationic condensate is applied to the textile material.

4. A process as claimed in claim 1 or 2 or 3, wherein wool which has been provided with an antifelting finish is aftertreated.

5. A process as claimed in claim 1, wherein wool which has been provided with an antifelting finish and dyed with a metal complex dye is aftertreated.

**Revendications**

1. Procédé pour le post-traitement de materiaux textiles teints en polyamides naturels ou synthétiques, qui sont teints avec des colorants à groupes acide ou à groupes sulfonamide, avec des solutions aqueuses diluées de produits de condensation cationiques, caractérisé par le fait que l'on utilise comme produits de condensation cationiques des matières qui sont obtenues par réaction de

a) pipérazine, bis-(1,4-aminopropyle)-pipérazine, 1-aminoéthylpipérazine, 2-hydroxyéthylpipérazine, 1-méthylpipérazine ou leurs melanges avec
b) chlorure d'ethylène, épihalogenhydrine, chlorure de propylène, 1,3-dichloro-2-hydroxy-propane, bis-époxibutane, 1,4-dichlorobutane ou leurs mélanges

en rapport molaire de 1/0,5 à 1,1 et quaternisation des produits de condensation avec du chlorure de benzyle, 0,15 à 1,0 mole de chlorure de benzyle par équivalent d'azote étant introduite dans le composant (a) pour la

quaternisation.

2. Procédé selon la revendication 1 caractérisé par le fait que le pH des solutions aqueuses des produits de concentration cationiques a une valeur de 5 à 9.

3. Procédé selon les revendications 1 et 2, caractérisé par le fait que par le post-traitement, 0,2 à 3 % en poids du produit de condensation cationique sont appliqués sur les matériaux textiles.

4. Procédé selon les revendications 1 à 3, caractérisé par le fait que l'on soumet au post-traitement de la laine apprêtée solide au feutrage.

5. Procédé selon la revendication 1, caractérisé par le fait que l'on soumet au post-traitement de la laine apprêtée solide au feutrage et teintes avec des colorants à complexe métallifère.